# EUROPÄISCHE PATENTSCHRIFT

(11) **EP 0 791 237 B1**
(45) Veröffentlichungstag und Bekanntmachung des Hinweises auf die Patenterteilung: **23.09.1998**
(21) Anmeldenummer: 95935813.6
(22) Anmeldetag: 24.10.1995
(51) Int. Cl.: H02K 7/116, H02K 9/19

(54) **MOTORGETRIEBE**
MOTOR-DRIVE ASSEMBLY
ENSEMBLE MOTEUR-REDUCTEUR

(30) Priorität: 12.11.1994 DE 4440565
(43) Veröffentlichungstag der Anmeldung: 27.08.1997
(73) Patentinhaber: GSC Schwörer GmbH, D-79871 Eisenbach (DE)
(72) Erfinder: ORLOWSKI, Bernhard, D-70176 Stuttgart (DE)
(74) Vertreter: Patentanwalts-Partnerschaft Rotermund + Pfusch
(86) Internationale Anmeldenummer: DE9501496
(87) Internationale Veröffentlichungsnummer: WO9615575

(56) Entgegenhaltungen:
- EP-A- 0 086 494
- DE-B- 1 183 589
- DE-B- 1 218 601
- GB-A- 2 220 178

## Beschreibung

Die Erfindung betrifft ein Motorgetriebe mit einem auf ein Planetenzahnradgetriebe einwirkenden Elektromotor, bei dem das Getriebe und der Motor in einem gemeinsamen Raum ölbenetzt sind.

Ein solches aus GB 2 220 178 A bekanntes, kleinbauendes Motorgetriebe soll geräusch- und/oder leistungsverlustarm laufend ausgebildet werden.

Grundsätzliche Lösungen hierfür zeigen gattungsgemäße Motorgetriebe mit einerseits den kennzeichnenden Merkmalen des Anspruchs 1 und andererseits den Merkmalen nach den Ansprüchen 15 und 16 auf. Bei der Lösung nach Anspruch 15 liegt zumindest ein geräuscharm laufendes Getriebe vor. Dies bedeutet, daß bei einem solchen Aufzugsgetriebe zumindest eines der der Erfindung alternativ zugrundeliegenden eingangs genannten technischen Probleme gelöst ist, nämlich dasjenige, nach dem ein geräuscharmer Getriebelauf angestrebt wird. Bei der Lösung nach Anspruch 16 wird dagegen der gesamte vorstehend angegebene Problemkomplex gelöst, da durch den konkret beanspruchten kleinen Modul geringere Strömungsverluste realisierbar sind als bei größeren bisher allgemein üblichen Modulen.

Ein Beispiel für ein lediglich gattungsmäßig ähnliches Motorgetriebe, auf das die erfindungsgemäßen Lösungen unter anderem anwendbar sind, zeigt DE 12 18 601 B. Soweit aus diesem Dokument ein Motorgetriebe mit einem Elektromotor und einem Zahnradgetriebe bekannt ist, bei dem das Getriebe und ein Teil des Elektromotors, nämlich dessen Läufer, in einem gemeinsamen, vollständig mit Öl ausgefüllten Raum arbeiten, ist diese Einrichtung nicht mit der Erfindung vergleichbar. Bei der Motorgetriebe-Ausführung nach jenem Dokument geht es nämlich nicht darum, hörbare Laufgeräusche des Getriebes zu verkleinern, sondern allein darum, von einem Synchron-Kleinstmotor mit polarisiertem Läufer und hoher Polpaarzahl ausgehende Geräusche zu verringern. Bei derartigen Motoren hängt die Laufruhe stark von einem geringen Phasenwinkel zwischen Läufermagnetisierung und Drehfeld des Ständers ab. Dies ist dort in Spalte 1, Zeilen 12 bis 18 ausgeführt und erläutert. Durch die bei jenen Motorgetrieben vorgesehene vollständige Ölfüllung des gemeinsamen Getriebe- und Elektromotorläuferraumes soll die Ölfüllung auf das Getriebe eine Bremswirkung ausüben. Durch diese Bremswirkung soll der das Motorgeräusch beeinflussende Phasenwinkel zwischen der Läufermagnetisierung und dem Drehfeld des Ständers zur Erzielung eines geringen Motorgeräusches möglichst klein gehalten werden. Der Läufer soll bevorzugt sogar nach der Angabe in Spalte 2, Zeilen 35 bis 30 jener Schrift derart ausgebildet oder gestaltet sein, daß er eine Art Schaufelradbildung zur Erhöhung seines Lauwiderstandes erhält. Diese Problematik steht in krassem Widerspruch zu dem der Erfindung zugrundeliegenden Problem, nach dem in erster Linie das von dem Getriebeteil des Motorgetriebes ausgehende Laufgeräusch gering gehalten werden soll.

Die getriebebedingten Laufgeräusche werden bei dem erfindungsgemäßen Motorgetriebe durch das sämtliche Freiräume vollständig ausfüllende Öl erheblich gedämpft. Innerhalb des Elektromotorteils dient die Ölfüllung für eine hervorragende Kühlung, wodurch der Elektromotorteil bei gleichbleibender Leistung erheblich gegenüber einem nicht vollständig mit Öl ausgefüllten Motor baulich verkleinert werden kann.

Das Öl in dem Motorgetriebe kann in einem Kühler, der in das Gehäuse des Motorgetriebes integriert oder auch zusätzlich über entsprechend vorgesehene Anschlüsse an dieses angeschlossen sein kann, gekühlt werden. Dadurch kann das Bauvolumen insgesamt noch einmal beträchtlich verkleinert werden.

Bei einem vollständig in Öl laufenden Getriebe ist es wichtig, daß die rotierenden Getriebeteile möglichst geringe Strömungswiderstände verursachen. Besonders günstig wirkt in dieser Hinsicht eine im wesentlichen geschlossene kreisrunde Scheibenform des Planetenradträgers, der in der bisher üblichen offenen Form in erheblichem Maße zu einer leistungsmindernden und gleichzeitig geräuschverursachenden Ölverwirbelung innerhalb eines laufenden Getriebes beiträgt.

Zu dem gleichen Zweck werden bei dem Getriebe bevorzugt Verzahnungen mit jeweils einem kleinen Modul wie insbesondere etwa m = Zahnradbreite dividiert durch 40 eingesetzt. Die Verzahnung kann eine Gerad- oder Schrägverzahnung sein.

Um den Elektroteil des Motors gut kühlen zu können, liegt der außenliegende Stator mit seinen Wicklungen nicht über seinen gesamten Umfang radial außen form- und flächenschlüssig an der Innenwand des Motorgehäuses an, sondern es sind dort Freiräume für hindurchströmendes Öl vorgesehen.

Aus einem einstufigen Getriebe kann durch Ansetzen eines Getriebeabtriebsflansches auf einfache Weise ein zweistufiges Getriebe geschaffen werden.

Bei einem Einsatz des Motorgetriebes als ein Aufzugsgetriebe kann die mit dem Rotor des Elektromotors verbundene Motorwelle durch den Motorabtriebsflansch hindurch nach außen geführt werden und dort in einfacher Weise mit einer Radscheibe verbunden werden. Diese Radscheibe bildet einerseits den Teil einer Backen- oder Scheibenbremse und andererseits ein Handrad für den Getriebemotor.

Weitere Ausführungen und Vorteile der Erfindung ergeben sich aus der nachfolgenden Beschreibung zweier Ausführungsbeispiele, die in der Zeichnung dargestellt sind.

In der Zeichnung zeigen
- Fig. 1: ein einstufiges Motorgetriebe teils im Längsschnitt, teils in Ansicht,

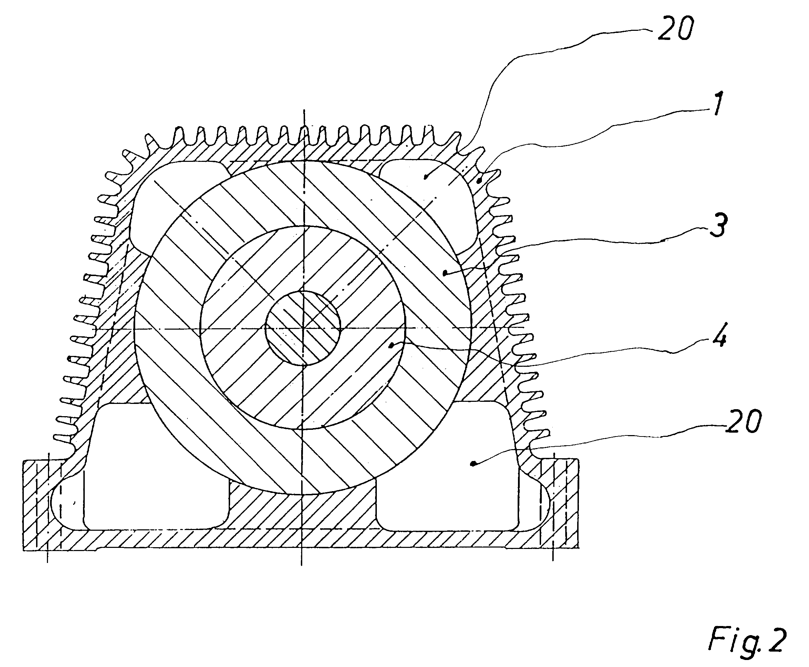

- Fig. 2: einen Schnitt durch den Motorteil des Motorgetriebes nach Linie II-II,
- Fig. 3: eine Ansicht auf den Planetenradträger der Getriebeausführung nach Fig. 1 in isolierter Darstellung mit dem Sonnenrad und den Planetenrädern aus der Richtung des Motorteils in der oberen Zeichnungshälfte und im Schnitt nach Linie III in Fig. 1 in der unteren Zeichnungshälfte,
- Fig. 4: ein zweistufiges Motorgetriebe in der Darstellung nach Fig. 1.
- Fig. 5: einen Ausschnitt aus dem Motorteil eines Motorgetriebes mit dem Motorabschlußflansch nach Fig. 1 mit einer durch den Motorabschlußflansch hindurchgeführten Motorwelle.

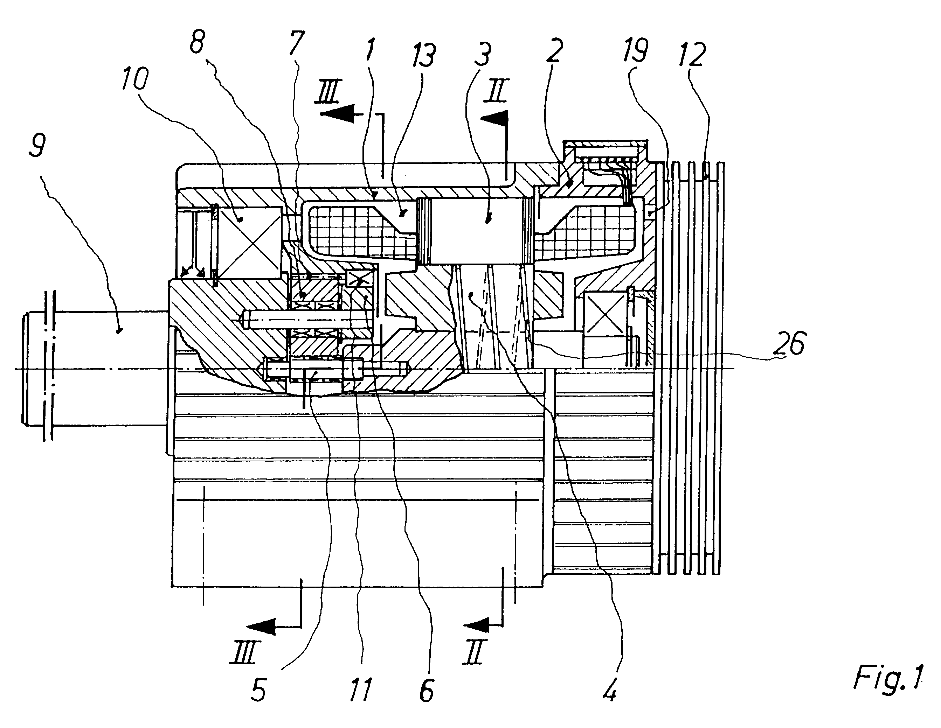

Das Motorgetriebe nach Fig. 1 besteht im wesentlichen aus einem motorseitig mit einem Motorabschlußflansch 2 verschlossenen Gehäuse 1.

Der Elektromotor besteht aus einem radial außen in dem Gehäuse 1 fest gelagerten ringförmigen Stator 3 und einem radial innerhalb koaxial gelagerten Rotor 4.

Der Rotor 4 ist integrierter Bestandteil der Motorabtriebswelle. an die wiederum ein den Getriebeeingang bildendes Sonnenrad 5 angebunden ist. An dem von dem Getriebeteil abgewandten Ende des Rotors 4 ist dieser in einem das Gehäuse 1 fest verschließenden Motorabschlußflansch 2 wälzgelagert.

Das Sonnenrad 5 treibt innerhalb des Getriebes in einem Planetenradträger 6 gelagerte und in einem in dem Gehäuse 1 starr festgelegten Hohlrad 7 kämmende Planetenräder 8 an. Das von dem Motor entfernt liegende freie Ende des Planetenradträgers 6 dient als Getriebeabtriebswelle 9. Der Planetenradträger 6 ist über Wälzlager 10 und 11 in dem Getriebe-Gehäuse 1 drehbar axial fixiert gelagert.

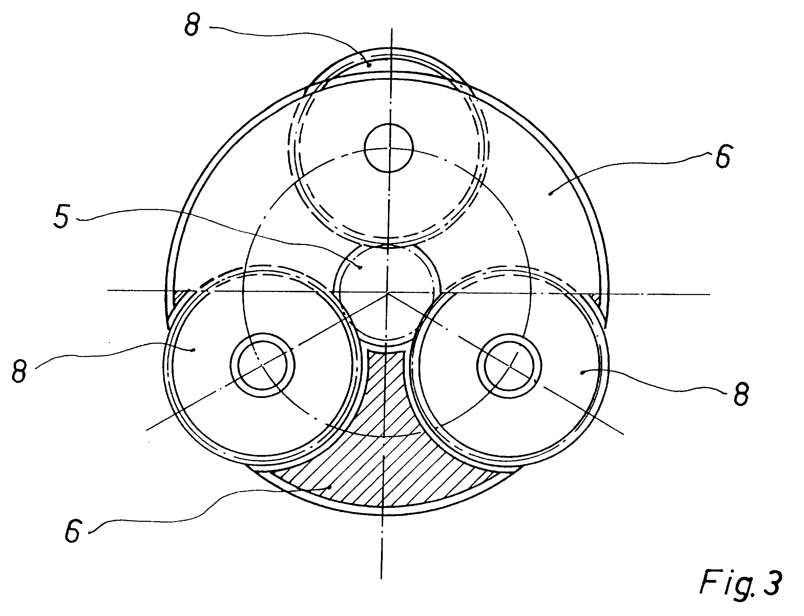

Das die Planetenräder 8 tragende Ende des Planetenrradträgers 6 ist in der Grundform als eine Art geschlossene Scheibe mit Ausnehmungen für die Aufnahme des Sonnenrads 5 einerseits und der Planetenräder 8 andererseits ausgebildet wie die Darstellung in Fig. 3 recht anschaulich zeigt. Der Außenrand des Planetenradträgers 6 sowie derjenige der zentralen Ausnehmung zur Aufnahme des Sonnenrades 5 sind jeweils als koaxiale Zylinderflächen mit einem Mittelpunkt auf der Drehachse des Planetenradträgers 6 geformt.

Der Planetenradträger 6 besitzt damit mit Bezug auf eine Rotation innerhalb einer Getriebe und Motor gleichermaßen vollständig ausfüllenden Ölfüllung eine optimale Stromlinienform. Hierdurch wird wiederum eine relativ geringe Ölverwirbelung bei laufendem Getriebe erreicht. Eine geringe Ölverwirbelung bedeutet einen geringen strömungsbedingten Leistungsverlust bei einem vollständig mit Öl ausgefüllten Motorgetriebe. Auch geräuschmäßig wirken sich geringe Ölverwirbelungen günstig aus. In die gleiche Richtung wirken Verzahnungen mit jeweils einem sehr kleinen Modul von beispielsweise m=0,5 und damit einer Planetenradbreite von etwa B=40xm=20mm.

Wegen des Fehlens einer Trennwand zwischen Getriebe- und Motorteil können Teile des Motors und des Getriebes bauraumsparend ineinandergreifen. So kann das äußere Hohlrad 7 in einen in das Innere des Gehäuses 1 hineingezogenen Winkelringflansch integriert werden. Dadurch können die elektrischen Wicklungen des Stators 3 in einem Ringraum 13 radial außerhalb des Hohlrades 7 untergebracht werden.

Durch die vollständige Ölfüllung von Getriebe und Motor wird einerseits eine hervorragende Dämpfung der Laufgeräusche des Getriebes und andererseits eine insbesondere für den Elektromotorteil erwünschte hohe Wärmeabfuhr erreicht. Durch die gute Wärmeabfuhr kann der Elektromotorteil räumlich verkleinert werden, da nur noch entsprechend geringere Wärmeableitungsflächen erforderlich sind.

Um die Kühlung des Elektromotors zu begünstigen, liegt der Stator 3 radial außen umfangsmäßig nur teilweise in dem Gehäuse 2 an. In den verbleibenden Freiräumen 20 kann öl den Ständer 3 mit seinen Wicklungen zur Kühlung umströmen. Für ein zwangsweises Durchströmen des Elektromotors mit Öl kann der Rotor 4 radial außen mit einer wendelförmig jeweils offen in die axialen Stirnseiten des Rotors 4 verlaufenden Öl-Fördernut 26 versehen sein. Beim Drehen des Rotors 4 fördert diese Nut 26 jeweils Öl von einer axialen Seite des Rotors 4 zu dessen anderem Ende. Die Förderrichtung hängt dabei von der Drehrichtung des Rotors 4 ab. Für die angestrebte Öl-Durchflutung ist die jeweilige Förderrichtung gleichgültig. Wichtig ist lediglich, daß eine Ölzirkulation überhaupt eintritt.

Eine Öldichtheit des Motorgetriebes ist im Prinzip unproblematisch zu erreichen. Das Gehäuse 2 weist nach außen lediglich ruhende Teile auf, die einfach zu dichten sind. Lediglich auf der Getriebeseite muß eine übliche Laufdichtung zwischen der Getriebeabtriebswelle 9 und der ruhenden Außenwand des Gehäuses 1 vorgesehen werden.

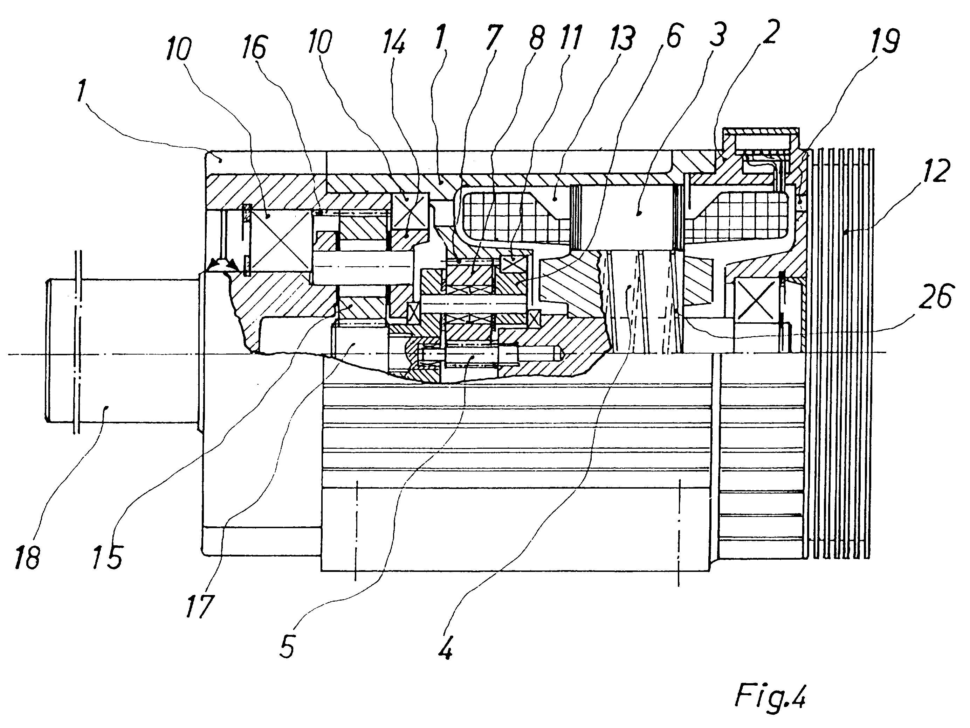

Das in der Fig. 4 dargestellte zweistufige Motorgetriebe ist grundsätzlich in gleicher Weise aufgebaut wie das zuvor beschriebene einstufige Getriebe. Gleiche Teile sind dort daher auch gleich bezeichnet. Bei dem Getriebe haben viele Teile sogar in beiden Fällen gleiche Abmessungen. Es sind dies hier beispielsweise das Gehäuse 1 mit dem Hohlrad 7, die Planetenräder 8 und das Sonnenrad 5 sowie der Motorabschlußflansch 2. Für die Aufnahme der zweiten Getriebestufe ist an das Gehäuse 1 einfach ein zusätzlicher Getriebeabtriebsflansch l'angesetzt.

Dieser Getriebeabtriebsflansch 1' ist zum Teil in das Gehäuse 1 eingeschoben. Die in dem Planetenradträger 14 der zweiten Getriebestufe geführten Planetenräder 15 greifen in ein Hohlrad 16 ein, das in dem in das Gehäuse 1 eingeschobenen Bereich des Getriebeabtriebsflansches 1' liegt. Der motorseitig liegende Teil des Planetenradträgers 14 der zweiten Getriebestufe ist über ein Wäkzlager 10 direkt in dem Gehäuse 1 gelagert. Dadurch wird eine äußerst stabile Lagerung der Getriebeabtriebswelle 18 der zweiten Getriebestufe erreicht. Zu einer solchen stabilen Lagerung trägt auch die Lage des Hohlrades 16 der zweiten Getriebestufe innerhalb des Gehäuses 1 bei.

Angetrieben wird die zweite Getriebestufe von einem Sonnenrad 17, das an den Planetenradträger 6 der ersten Getriebestufe angebunden ist. Der Planetenradträger 14 der zweiten Getriebestufe bildet getriebeabgangsseitig wiederum wie bei der einstufigen Ausführung die Getriebeabtriebswelle, die bei der zweistufigen Ausführung mit 18 bezeichnet ist.

Insgesamt unterscheidet sich das zweistufige Motorgetriebe praktisch allein durch die mit dem Getriebeabtriebsflansch angesetzte zweite Stufe von der einstufigen Ausführung, die daher ein unverändertes Basisteil der zweistufigen Ausführung ist.

Um eine noch bessere Kühlung der Motorgetriebeteile zu erreichen, kann das Öl durch einen Ölkühler 12 zwangsgeführt werden. Ein solcher Ölkühler 12 wird gegebenenfalls einfach auf den Motorabschlußflansch des ein- oder zweistufigen Motorgetriebes aufgesetzt. Als Verbindung für den Ölfluß dient eine Anschlußöffnung 19.

Um bei einem vollständig mit Öl ausgefüllten Motorgetriebe dem Öl die Möglichkeit einer temperaturbedingten Volumenänderung zu verschaffen, kann eine Expansionsausgleichseinrichtung in beispielsweise der Form eines elastisch gegen Atmosphäre verformbaren Balges vorgesehen sein.

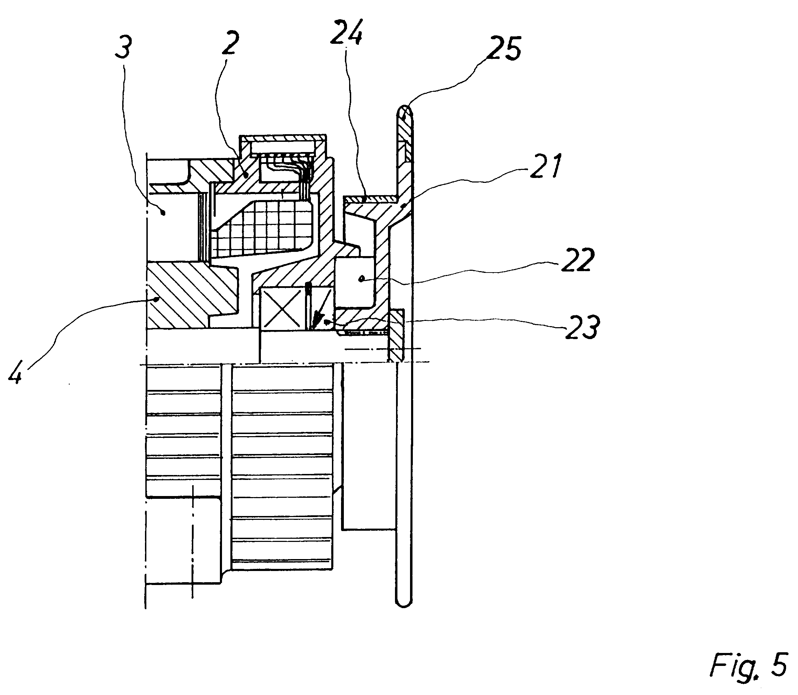

Bei einer Ausführung als Aufzugs-Motorgetriebe nach Fig. 5 ist die mit dem Rotor 4 des Elektromotors verbundene Motorabtriebswelle öldicht über eine an ihr angreifende Wellendichtung durch den Motorabschlußflansch 2 nach außen geführt. An dem herausragenden Wellenende ist eine Radscheibe 21 fest aufgesetzt. Ein Abschnitt des Umfangs dieser Radscheibe 21 dient als Teil einer Motorbremse. Diese Bremse kann als Backen- oder Scheibenbremse ausgebildet sein. Bei dem gezeigten Ausführungsbeispiel ist die betreffende Bremse eine Backenbremse, deren hier nicht dargestellte Backen an einem der feststehenden Teile des Motorgetriebes angelenkt sind und an dem Außenumfangsbereich 24 der Radscheibe 21 angreifen können.

In einem weiteren Teilbereich kann die Radscheibe 21 zusätzlich noch als Handradbereich 25 zum Durchdrehen der Motorabtriebswelle von Hand ausgebildet sein.

Zwischen Radscheibe 21 und Motorabschlußflansch 2 kann ein bei Aufzuggetriebemotoren üblicher Tachometer 22 angebracht sein.

Anstelle des Ölkühlers 12 oder ggf. auch noch zusätzlich zu diesem kann ein bei Elektromotoren üblicher in der Zeichnung nicht dargestellter Lüfter an dem Motorabtriebsflansch 2 vorgesehen sein.

Folgende Leistungsdaten sind mit den vorstehend beschriebenen und in der Zeichnung dargestellten ein- und zweistufigen Ausführungsformen beispielsweise erreichbar.

### Einstufiges Motorgetriebe:

Übersetzungsverhältnis von i=13 bei einer Eingangsdrehzahl von n(1)=1350 U/min und einer Ausgangsdrehzahl von n(2)=103,5 U/min.

Abtriebsdrehmoment von 50 Nm bei einem Elektromotor mit einer Leistung von 0,55 KW.

### Zweistufiges Motorgetriebe:

Übersetungsverhältnis der ersten Stufe i(1)=7,85 bei einer Eingangsdrehzahl von n(1e)=1350 U/min

Übersetzungsverhältnis der zweiten Stufe i(2)=6 bei einer Ausgangsdrehzahl von n(2a)=28,6 U/min

Ausgangsdrehmoment von 500 Nm bei einem Elektromotor mit einer Leistung von 1,5 KW.

Mit dem erfindungsgemäßen Motorgetriebe lassen sich extrem kleinbauende und geräuscharm laufende leistungsstarke Ausführungen auf konstruktiv überraschend einfache Weise erreichen. Erforderlich ist in erster Linie lediglich eine trennwandlose Gestaltung zwischen Getriebe- und Motorteil bei gleichzeitiger vollständiger Ausfüllung der geschlossenen Getriebe- und Motorfreiräume mit Öl, das ggf. noch in einem ölkühler zwangsgekühlt werden kann. Im Falle der Ausführung als Aufzugsgetriebemotor läßt sich ohne besonderen Aufwand eine Bremse und ein Handrad integrieren.

## Patentansprüche

1. Motorgetriebe, insbesondere für den Antrieb eines Aufzuges, mit einem auf ein Planetenzahnradgetriebe (1) einwirkenden Elektromotor, bei dem das Getriebe (1) und der Motor (2) in einem gemeinsamen ölbenetzten Raum untergebracht sind und bei dem die Motorabtriebswelle über ein mit dieser fest verbundenes Sonnenrad (5) in einem gehäusefesten äußeren Hohlrad (7) kämmende, in einem Planetenradträger (6) gelagerte Planetenräder (8) antreibt,
**dadurch gekennzeichnet,**
daß der gemeinsame, trennwandfreie Raum für das Getriebe- und Motorteil (1, 2) vollständig mit Öl ausgefüllt ist und daß der Planetenradträger (6) eine geschlossene Scheibe mit kreisförmigem Außendurchmesser ist und lediglich eng begrenzte Ausnehmungen für das Sonnenrad (5) und die Planetenräder (8) besitzt, von denen die Ausnehmung für das Sonnenrad (5), in die die Ausnehmungen für die Planetenräder (6) einmünden, einen ebenfalls kreisförmigen Außendurchmesser aufweist, und daß ferner die Mittelpunkte der beiden kreisförmigen Außendurchmesser gemeinsam auf der Drehachse des Planetenradträgers (6) liegen.

2. Motorgetriebe nach Anspruch 1,
**dadurch gekennzeichnet**,
daß die Verzahnung des Getriebes mit einem kleinen Modul m von etwa Zahnradbreite dividiert durch 40 ausgebildet ist.

3. Motorgetriebe nach einem der vorhergehenden Ansprüche,
**dadurch gekennzeichnet**,
daß dieses einen Ölkühler (12) oder zumindest Anschlüsse (19) für einen solchen besitzt, um das Öl in diesem Kühler durch Zwangsumlauf zusätzlich zu kühlen.

4. Motorgetriebe nach einem der vorhergehenden Ansprüche,
**dadurch gekennzeichnet**,
daß das Planetengetriebe mehrstufig mit jeweils außenliegenden gehäusefesten Hohlrädern (7, 16) und jeweils den kennzeichnenden Merkmalen des Anspruchs 1 entsprechenden Planetenradträgern (6, 14) ausgebildet ist.

5. Motorgetriebe nach einem der vorhergehenden Ansprüche,
**dadurch gekennzeichnet**,
daß der Elektromotor einen außenliegenden Stator (3) mit axial ausgerichteten Wicklungen besitzt, die das dem Elektromotor zugewandte Hohlrad (7) des Planetengetriebes von radial außen hintergreifen.

6. Motorgetriebe nach Anspruch 5,
**dadurch gekennzeichnet**,
daß der Stator (3) des Elektromotors (2) in Teilbereichen seines Außenumfanges axial verlaufende, von in dem Motorgehäuse befindlichem Öl zur Kühlung durchströmbare Freiräume (20) besitzt.

7. Motorgetriebe nach einem der vorhergehenden Ansprüche,
**dadurch gekennzeichnet**,
daß der Rotor (4) des Elektromotors (2) radial außen mit mindestens einer wendelförmig an den axialen Enden des Rotors (4) jeweils offen auslaufenden Ölführungs-Nut (26) versehen ist.

8. Motorgetriebe nach einem der vorhergehenden Ansprüche,
**dadurch gekennzeichnet**,
daß die Planetengetriebe-Abtriebswelle (9, 18) mit dem dieser benachbarten Planetenträger (6) bzw. (14) einstückig ausgebildet ist.

9. Motorgetriebe nach einem der vorhergehenden Ansprüche mit einem einstufigen Getriebeteil,
**dadurch gekennzeichnet**,
daß dieses Motorgetriebe aus einem den gesamten Getriebeteil zusammen mit einem Teil des Motors aufnehmenden Gehäuse (1) und einem den verbleibenden Teil des Motors aufnehmenden das freie Ende der Motorabtriebswelle lagernden Motorabschlußflansch (2) besteht.

10. Motorgetriebe nach einem der Ansprüche 1 bis 8 mit einem zweistufigen Getriebeteil,
**dadurch gekennzeichnet**,
daß die zweite Stufe des Getriebeteiles in einem Getriebeabtriebsflansch (1') untergebracht ist, der axial über einen Teilbereich so weit in ein unverändertes Gehäuse (1) eines einstufigen Motorgetriebes einschiebbar ist, daß in diesem die Planetenräder (15) der zweiten Getriebestufe in diesem Teilbereich liegen.

11. Motorgetriebe nach Anspruch 10,
**dadurch gekennzeichnet**,
daß der Planetenradträger (14) der zweiten Getriebestufe motorseitig direkt in dem Gehäuse (1) der ersten Getriebestufe wälzgelagert ist.

12. Motorgetriebe nach einem der vorhergehenden Ansprüche, insbesondere als Aufzugsgetriebe,
**dadurch gekennzeichnet**,
daß die mit dem Rotor (4) des Elektromotors verbundene Motorabtriebswelle durch den Motorabschlußflansch (2) nach außen hindurchgeführt und mit einer als Teil einer Bremse und/oder einem Handrad dienenden Radscheibe (21) versehen ist.

13. Motorgetriebe nach Anspruch 12,
**dadurch gekennzeichnet,**
daß die Bremse eine Backen- oder Scheibenbremse ist.

14. Motorgetriebe nach Anspruch 12 oder 13,
**dadurch gekennzeichnet**,
daß zwischen der Radscheibe (21) und dem Motorabschlußflansch (2) ein Tachometer (22) eingebaut ist.

15. Verwendung eines Motorgetriebes, insbesondere eines solchen nach einem der vorhergehenden Ansprüche, mit einem auf ein Planetenzahnradgetriebe (1) einwirkenden Elektromotor (2), bei dem das Getriebe (1) und der Motor in einem gemeinsamen, trennwandfreien, vollständig mit Öl ausgefüllten Raum untergebracht sind, für den Antrieb eines Aufzuges.

16. Verwendung eines Motorgetriebes nach Anspruch 15, bei dem die Verzahnung des Getriebes (1) mit einem kleinen Modul (m) von etwa Zahnradbreite dividiert durch 40 ausgebildet ist.

## Claims

1. Motor-gear assembly, in particular for driving a lift, with an electric motor which acts upon a planet gear (1) and in which the gear (1) and the motor (2) are housed in a common space wetted with oil and where the motor output shaft drives planet wheels (8) mounted in a planet carrier (6) and meshing in an external ring gear (7) rigid with the housing by means of a sun wheel (5) rigidly connected thereto, characterized in that the common space without a dividing wall is completely filled with oil for the gear and motor parts (1, 2) and that the planet carrier (6) is an enclosed disk with a circular external diameter and has only narrowly restricted recesses for the sun wheel (5) and the planet wheels (8), of which the recess for the sun wheel (5) into which the recesses for the planet wheels (6) merge also has a circular external diameter and, moreover, the mid-points of the two circular external diameters have a common position on the axis of rotation of the planet carrier (6).

2. Motor-gear assembly according to claim 1, characterized in that the gearing of the gear is formed by a small module m of about gear-wheel width divided by 40.

3. Motor-gear assembly according to one of the preceding claims, characterized in that it has an oil cooler (12) or at least connections (19) for an oil cooler, in order additionally to cool the oil in this cooler by forced circulation.

4. Motor-gear assembly according to one of the preceding claims, characterized in that the planet gear is formed in many stages, each with externally situated ring gear (7, 16) rigid with the housing and each with the planet carriers (6, 14) corresponding to the characterizing features of claim 1.

5. Motor-gear assembly according to one of the preceding claims, characterized in that the electric motor has an external stator (3) with axially aligned windings, which reach radially externally behind the ring gear (7) turned towards the electric motor.

6. Motor-gear assembly according to claim 5, characterized in that the stator (3) of the electric motor (2) has free spaces (20) which extend axially in parts of its external periphery and can be permeated by oil located in the motor housing for cooling purposes.

7. Motor-drive assembly according to one of the preceding claims, characterized in that the rotor (4) of the electric motor (2) is provided radially externally with at least one oil guide groove (26) opening helically at the axial ends of the rotor (4) in each case.

8. Motor-gear assembly according to one of the preceding claims, characterized in that the planet gear output shaft (9, 18) is formed in one piece with the planet carrier (6) or (14) adjacent to it.

9. Motor-gear assembly according to one of the preceding claims with a single-stage gear part, characterized in that this motor gear assembly consists of a housing (1) which receives the entire gear part together with a part of the motor and a motor end flange (2) receiving the remaining part of the motor and supporting the free end of the motor output shaft.

10. Motor-gear assembly according to one of the claims 1 to 8 with a two stage gear part, characterized in that the second stage of the gear part is housed in a gear output flange (1'), which can be pushed so far axially through a region into an unmodified housing (1) of a single stage motor gear assembly that the planet wheels (15) of the second gear stage are located in this region.

11. Motor-gear assembly according to claim 10, characterized in that the planet carrier (14) of the second gear stage is mounted on a rolling bearing directly in the housing (1) of the first gear stage on the motor side.

12. Motor-gear assembly according to one of the preceding claims, particularly as lift gear, characterized in that the motor output shaft connected to the rotor (4) of the electric motor leads outwards through the motor end flange (2) and has a wheel disk (21) acting as part of a brake and/or a hand wheel.

13. Motor-gear assembly according to claim 12, characterized in that the brake is a shoe or disk brake.

14. Motor-gear assembly according to claim 12 or 13, characterized in that a tachometer (22) is fitted between the wheel disk (2) and the motor end flange (2).

15. Use of a motor-gear assembly, in particular of one according to one of the preceding claims, with an electric motor (2) which acts upon a planet gear (1) and in which the gear (1) and the motor are housed in a common space without a dividing wall and completely filled with oil, to drive a lift.

16. Use of a motor-gear assembly according to claim 15, in which the gearing of the gear (1) consists of a small module (m) of about gear-wheel width divided by 40.

## Revendications

1. Ensemble moteur-boîte de vitesses, en particulier pour l'entraînement d'un ascenseur, comprenant un moteur électrique agissant sur une boîte de vitesses (1) à roue dentée planétaire, dans lequel la boîte de vitesses (1) et le moteur (2) sont disposés dans un espace commun rempli d'huile, et dans lequel l'arbre de sortie du moteur entraîne, par l'intermédiaire d'une roue solaire (5) fixée solidement à celui-ci, dans une couronne de train planétaire (7) extérieure fixée au carter, des roues planétaires (8) s'engrenant, montées dans un support de roue planétaire (6),
caractérisé en ce que
l'espace commun, dépourvu de cloison de séparation, pour la partie boîte de vitesses et moteur (1, 2), est complètement rempli d'huile et en ce que le support de roue planétaire (6) est un disque fermé de contour extérieur circulaire et ne possède que des évidements étroitement limités pour la roue solaire (5) et les roues planétaires (8), dont l'évidement pour la roue solaire (5), dans lequel débouchent les évidements pour les roues planétaires (6), présente un contour extérieur également circulaire, et en ce qu'en outre, les centres des deux contours extérieurs circulaires se trouvent conjointement sur l'axe de rotation du support de roue planétaire (6).

2. Ensemble moteur-boîte de vitesses selon la revendication 1,
caractérisé en ce que
la denture de la boîte de vitesses est formée avec un petit module m correspondant à environ la largeur de la roue dentée divisée par 40.

3. Ensemble moteur-boîte de vitesses selon l'une quelconque des revendications précédentes,
caractérisé en ce que
celui-ci possède un refroidisseur d'huile (12) ou au moins des raccordements (19) pour un tel refroidisseur, afin de refroidir ultérieurement l'huile dans ce refroidisseur par circulation forcée.

4. Ensemble moteur-boîte de vitesses selon l'une quelconque des revendications précédentes,
caractérisé en ce que
la boîte à engrenages planétaires est formée en plusieurs étages avec à chaque fois des couronnes de trains planétaires (7, 16) fixées au carter et se trouvant à l'extérieur, et à chaque fois, des supports de roue planétaire (6, 14) correspondant aux caractéristiques de la revendication 1.

5. Ensemble moteur-boîte de vitesses selon l'une quelconque des revendications précédentes,
caractérisé en ce que
le moteur électrique possède un stator extérieur (3) avec des enroulements orientés axialement, qui viennent en prise par l'arrière radialement avec la couronne de train planétaire (7) de la boîte à engrenages planétaires tournée vers le moteur électrique.

6. Ensemble moteur-boîte de vitesses selon la revendication 5,
caractérisé en ce que
le stator (3) du moteur électrique (2) possède, dans des zones partielles de sa périphérie extérieure, des espaces libres (20) s'étendant axialement, pouvant être parcourus par l'huile de refroidissement se trouvant dans le carter du moteur.

7. Ensemble moteur-boîte de vitesses selon l'une quelconque des revendications précédentes,
caractérisé en ce que
le rotor (4) du moteur électrique (2) est pourvu, radialement vers l'extérieur, d'au moins une gorge (26) de guidage de l'huile s'étendant à chaque fois, de manière ouverte, en spirale, aux extrémités axiales du rotor (4).

8. Ensemble moteur-boîte de vitesses selon l'une quelconque des revendications précédentes,
caractérisé en ce que
l'arbre de sortie (9, 18) de la boîte à engrenages planétaires est formé d'une seule pièce avec le support planétaire (6) ou (14) voisin de celui-ci.

9. Ensemble moteur-boîte de vitesses selon l'une quelconque des revendications précédentes, avec une partie boîte de vitesses à un étage,
caractérisé en ce que
cet ensemble moteur-boîte de vitesses se compose d'un carter (1) recevant l'ensemble de la partie boîte de vitesses ainsi qu'une partie du moteur et une bride de fermeture du moteur (2) supportant l'extrémité libre de l'arbre de sortie du moteur et recevant la partie restante du moteur.

10. Ensemble moteur-boîte de vitesses selon l'une quelconque des revendications 1 à 8, avec une partie de boîte de vitesses à deux étages,
caractérisé en ce que
le deuxième étage de la partie de boîte de vitesses peut être placé dans une bride de sortie de boîte de vitesses (1'), qui peut être poussée axialement sur une zone partielle si loin dans un carter non modifié (1) d'un ensemble moteur-boîte de vitesses à un étage, que les roues planétaires (15) du deuxième étage de boîte de vitesses se trouvent dans cette zone partielle.

11. Ensemble moteur-boîte de vitesses selon la revendication 10,
caractérisé en ce que
le support de roue planétaire (14) du deuxième étage de boîte de vitesses est monté sur roulement du côté du moteur directement dans le carter (1) du premier étage de boîte de vitesse.

12. Ensemble moteur-boîte de vitesses selon l'une quelconque des revendications précédentes, en particulier en tant que boîte de vitesses d'ascenseur,
caractérisé en ce que
l'arbre de sortie du moteur relié au rotor (4) du moteur électrique est poussé à travers la bride de fermeture du moteur (2) vers l'extérieur, et est pourvu d'un disque de roue (21) servant de partie d'un frein et ou d'un volant à main.

13. Ensemble moteur-boîte de vitesses selon la revendication 12,
caractérisé en ce que
le frein est un frein à mâchoire ou à disque.

14. Ensemble moteur-boîte de vitesses selon la revendication 12 ou 13,
caractérisé en ce qu'entre le disque de roue (21) et la bride de fermeture du moteur (2), est intégré un tachymètre (22).

15. Utilisation d'un ensemble moteur-boîte de vitesses, en particulier selon l'une quelconque des revendications précédentes, comprenant un moteur électrique (2) agissant sur une boîte de vitesses à roue dentée planétaire (1), dans lequel la boîte de vitesses (1) et le moteur sont disposés dans un espace commun complètement rempli d'huile et dépourvu de cloison, pour l'entraînement d'un ascenseur.

16. Utilisation d'un ensemble moteur-boîte de vitesses selon la revendication 15, dans lequel la denture de la boîte de vitesses (1) est formée avec un petit module (m) d'environ la largeur de la roue dentée divisée par 40.
